# EUROPÄISCHE PATENTSCHRIFT

(11) **EP 3 162 197 B1**
(45) Veröffentlichungstag und Bekanntmachung des Hinweises auf die Patenterteilung: **06.12.2017**
(21) Anmeldenummer: 15192445.3
(22) Anmeldetag: 30.10.2015
(51) Int. Cl.: A01K 1/02

(54) **FALTBARE TRANSPORTBOX**
FOLDABLE TRANSPORT BOX
CAGE DE TRANSPORT PLIABLE

(43) Veröffentlichungstag der Anmeldung: 03.05.2017
(73) Patentinhaber: Rotho Kunststoff AG, 5303 Würenlingen (CH)
(72) Erfinder: Thoma, Christian, 79774 Abbruck (DE); Brunner, Markus, 5613 Hilfikon (CH)
(74) Vertreter: Lemcke, Brommer & Partner Patentanwälte Partnerschaft mbB

(56) Entgegenhaltungen:
- WO-A1-87/06805
- DE-U1- 8 701 988
- FR-A1- 2 315 226
- GB-A- 2 448 559
- US-A- 1 549 116
- US-A1- 2010 258 059

## Beschreibung

Die Erfindung betrifft eine faltbare Transportbox, insbesondere zum Transport von Kleintieren, nach dem Oberbegriff des Patentanspruchs 1. Eine faltbare Transportbox dieser Art umfasst einen Boden, zwei Stirnwände und zwei Seitenwände, die ein- oder mehrteilig ausgebildet sind. Die Stirnwände und die Seitenwände sind schwenkbar am Boden befestigt. In einem gefalteten Zustand der Transportbox sind die Stirnwände und die Seitenwände im Wesentlichen auf dem Boden zusammengelegt, während sie in einem aufgebauten Zustand der Transportbox, vom Boden ausgehend, an dem sie schwenkbar befestigt sind, im Wesentlichen nach oben orientiert aufgerichtet sind. Die Seitenwände sind im aufgebauten Zustand der Transportbox an deren Oberseite miteinander verbunden, um die Transportbox oben zu schließen. Hierbei bilden die Seitenwände eine Art Giebeldach.

Eine faltbare Transportbox der vorliegenden Art ist beispielsweise aus der USA-5,493,818 bekannt. Dort sind die Seitenwände jeweils dreiteilig ausgebildet, und sie sind an der Oberseite der Transportbox mit Scharnieren aneinander befestigt. Auch die einzelnen Teile der Seitenwände sind über Scharniere miteinander verbunden, so dass die Seitenwände in sich gefaltet werden können.

Um diese bekannte Transportbox vom aufgebauten Zustand in den gefalteten Zustand zu bringen, werden die beiden Stirnwände nach innen verschwenkt und auf den Boden aufgelegt. Danach können die Seitenwände aufgrund ihrer Mehrteiligkeit zusammengefaltet und in diesem Zustand ebenfalls auf dem Boden bzw. die beiden Stirnwände aufgelegt werden.

In einer der beiden Stirnwände dieser bekannten faltbaren Transportbox ist eine Türöffnung vorgesehen, in der eine mittels Scharnieren schwenkbar angebrachte Tür sitzt. Durch Öffnen derselben wird das Innere der Transportbox zugänglich, so dass sie im aufgebauten Zustand nutzbar ist.

Unter dem Gesichtspunkt einer kostengünstigen Herstellbarkeit und hinsichtlich einer möglichst leichten und komfortablen Benutzbarkeit ist diese bekannte Konstruktion wegen der vielen Scharniere und einer zusätzlich vorzusehenden Tür allerdings nicht optimal.

Eine weitere faltbare Transportbox, die zum Transport von Kleintieren, insbesondere Katzen und kleinen Hunden vorgesehen ist, ist aus der CN 202005193 U bekannt. Diese Transportbox besteht im Wesentlichen aus einem stabilen Boden, der sich an den Stirnseiten in zwei biegeweiche Stirnwände fortsetzt, sowie einem biegeweichen Haubenelement, das die beiden Seitenwände bildet. Es handelt sich somit um eine Art Reisetasche für ein Kleintier, die platzsparend demontiert werden kann.

Aus hygienischen Gründen ist es allerdings wünschenswert, eine Transportbox zum Transport von Kleintieren aus einem leicht zu reinigenden Material herzustellen, wobei aufgrund der Forderung, dass dieses Material möglichst leicht sein soll, Kunststoff erste Wahl ist. Um diesen allerdings mit der nötigen Stabilität zu versehen, kann er keine biegeweichen Eigenschaften aufweisen.

Eine aus mehreren Einzelteilen zusammensteckbare Transportbox für Kleintiere ist aus der US-A-5,467,734 bekannt. Diese Transportbox ist zwar in mehrere Einzelteile zerlegbar, um sie in einem platzsparenden Zustand transportieren zu können, jedoch handelt es sich nicht um eine faltbare Transportbox im Sinne der vorliegenden Erfindung, da das Zerlegen in die Einzelteile sowie ein Wiederaufbau der Transportbox in ihren aufgebauten Zustand ein Lösen bzw. Herstellen von vielen Steckverbindungen und ein entsprechendes Sichern bzw. Entsichern derselben erfordert.

Aus der US-A-1 549 116 ist eine faltbare Transportbox bekannt, die zwei einteilige Stirnwände und zwei zweiteilige Seitenwände aufweist. Die Seitenwände werden im aufgebauten Zustand so auf die Stirnwände aufgelegt, dass zwischen den Seitenwänden ein Spalt verbleibt. Diese Transportbox enthält eine Vielzahl von Scharnierelementen und ist relativ umständlich zu handhaben.

Aus der WO-A-87/06805 ist eine faltbare Transportbox bekannt, deren Seitenwände und Stirnwände mittels ungesicherter Steckverbindungen aneinander gehalten werden. Mittels einer mehrteiligen Seitenwand, die ein Dach der Transportbox bildet, ist es möglich, da Dach zu öffnen, um ein Kleintier in die Transportbox einzusetzen. Diese Transportbox ist im aufgebauten Zustand allerdings wenig stabil, insbesondere wenn das Dach geöffnet wird, so dass deren Handhabbarkeit Optimierungspotential bietet.

Aus der GB-A-2 448 559 ist ein Baukastensystem bekannt, das zu einem Käfig, einer Transportbox sowie zu unterschiedlichen hausähnlichen Strukturen zusammengebaut werden kann, die als Spielgeräte für eine Katze dienen sollen. Soweit das Baukastensystem zu einer Transportbox zusammengebaut wird, wird diese durch eine separate, in einer Seitenwand vorgesehene Tür mit zusätzlichen Scharnier- und Verriegelungselementen von außen zugänglich. Neben dem konstruktiven Aufwand für die zusätzliche Tür ist die Handhabbarkeit dieses Baukastensystems als Transportbox wegen der nur eingeschränkten Zugänglichkeit des Innenraums nicht optimal.

Die DE-U-87 01 988 offenbart eine Faltbox für Brieftauben. Es handelt sich um einen Karton-Faltbogen, der zu einer Transportbox aufgebaut werden kann und nach Benutzung weggeworfen wird.

Aus der FR-A-2 315 226 ist ein klappbares Drahtgehäuse bekannt, das einen Boden, zwei zweiteilige Seitenwände und zwei Stirnwände bildet. Eine Stirnwand ist mit einer separat zu öffnenden Tür versehen.

Die US-A-2010/0258059 offenbart eine faltbare Transportbox mit jeweils mehrteiligen Seitenwänden. In einer Stirnwand sind zwei separate Türen mit zusätzlichen Scharnierelementen und Verriegelungselementen vorgesehen, um den Inhalt der aufgebauten Transportbox zugänglich zu machen.

Ausgehend von diesem Stand der Technik liegt der vorliegenden Erfindung die Aufgabe zugrunde, eine faltbare Transportbox der eingangs genannten Art hinsichtlich einer möglichst kostengünstigen Herstellbarkeit und unkomplizierten Handhabbarkeit zu verbessern.

Gelöst ist diese Aufgabe durch eine faltbare Transportbox mit den Merkmalen des Patentanspruchs 1. Bevorzugte Ausgestaltungen der erfindungsgemäßen faltbaren Transportbox sind in den Patentansprüchen 2 bis 15 niedergelegt.

Eine faltbare Transportbox nach der vorliegenden Erfindung, die einen Boden sowie zwei am Boden schwenkbar befestigte Stirnwände und zwei Seitenwände umfasst, welche Stirnwände und Seitenwände im gefalteten Zustand der Transportbox im Wesentlichen auf dem Boden zusammengelegt sind, während sie im aufgebauten Zustand der Transportbox, vom Boden ausgehend, im Wesentlichen nach oben orientiert aufgerichtet sind, weist Seitenwände auf, die an der Oberseite der Transportbox im aufgebauten Zustand lösbar miteinander verbunden sind, wobei mindestens eine Seitenwand von den Stirnwänden lösbar und nach außen schwenkbar ist, um die Transportbox im aufgebauten Zustand zu öffnen. Der Zugang zum Inneren der Transportbox erfolgt also nicht über eine separat vorgesehene Tür, sondern durch Abklappen einer Seitenwand.

Dadurch, dass keine zusätzliche Tür vorgesehen werden muss, vereinfacht sich die Konstruktion der erfindungsgemäßen Transportbox. Durch die Abklappbarkeit einer der beiden Seitenwände im aufgebauten Zustand der Transportbox kann diese überdies leicht gehandhabt werden, wobei es besonders vorteilhaft ist, dass eine Seitenwand vollständig geöffnet werden kann; denn oftmals müssen Kleintiere, die in der Transportbox transportiert werden sollen, gegen ihren Widerstand in die Transportbox gesetzt werden, was durch eine Stirnwand oder gar eine darin eingelassene Türöffnung oft nur mit Mühe gelingt und weder für das Tier noch für den Menschen optimal ist.

Auch das Zusammenlegen der Transportbox, um sie vom aufgebauten Zustand in den gefalteten Zustand zu bringen, gestaltet sich mit der erfindungsgemäßen Konstruktion deutlich unaufwändiger als im bisherigen Stand der Technik, da die Seitenwände erfindungsgemäß an der Oberseite der Transportbox lösbar miteinander verbunden sind und somit jede Seitenwand und jede Stirnwand separat abgeklappt werden kann, um sie letztendlich auf dem Boden zusammenzulegen.

Die Seitenwände der erfindungsgemäßen Transportbox sind vorzugsweise mit lösbaren Verbindungselementen versehen, die insbesondere als einrastende Verbindungselemente ausgestaltet sind, wobei die Seitenwände im aufgebauten Zustand der Transportbox mit Hilfe dieser lösbaren Verbindungselemente an der Oberseite der Transportbox miteinander verbunden werden können.

Besondere Vorteile bietet es hierbei, wenn mindestens eine Seitenwand im gefalteten Zustand der Transportbox mit diesen lösbaren Verbindungselementen auch am Boden befestigt werden kann. So ist es möglich, die Stirnwände und die Seitenwände solcherart auf dem Boden zusammenzulegen, dass diejenige Seitenwand, deren lösbaren Verbindungselemente am Boden befestigt werden können, ganz oben zu liegen kommt. Durch das Befestigen dieser Seitenwand am Boden - im Zusammenwirken mit dem Scharnier, mit dem die Seitenwand am Boden schwenkbar angebracht ist - werden die zwischen dieser Seitenwand und dem Boden zusammengelegten Stirnwände und die andere Seitenwand im gefalteten Zustand gehalten und somit die Transportbox im gefalteten Zustand gesichert. Erfindungsgemäß können die lösbaren Verbindungselemente also die faltbare Transportbox sowohl im aufgebauten als auch im gefalteten Zustand sichern, was die Handhabung naturgemäß enorm vereinfacht.

Die lösbaren Verbindungselemente, die zumindest die Seitenwände an der Oberseite der Transportbox im aufgebauten Zustand miteinander verbinden, sind vorzugsweise als schwenkbare Rastelemente ausgebildet. Es reicht dann aus, wenn nur eine der beiden Seitenwände diese schwenkbaren Rastelemente aufweist. Diese können hinter eine entsprechende Haltefläche der anderen Seitenwand eingreifen, um die lösbare Verbindung herzustellen. Wahlweise können diese schwenkbaren Rastelemente dann auch im gefalteten Zustand der Transportbox hinter entsprechenden Halteflächen des Bodens eingerastet werden, um auch den gefalteten Zustand der Transportbox zu sichern.

Die erfindungsgemäß nach außen schwenkbare Seitenwand ist im aufgebauten Zustand der Transportbox vorzugsweise mittels Halteelementen lösbar an mindestens einer der beiden Stirnwände gesichert. Diese Halteelemente können bevorzugt ein elastisch verformbares Schnappelement umfassen, das an der betreffenden Seitenwand oder der zugehörigen Stirnwand angebracht ist, von innen in eine Öffnung der jeweils anderen Wand, also der Stirnwand oder der Seitenwand eingreift und durch Druck von außen aus dem Eingriff lösbar ist. Es entsteht so eine Art Drucktaste, die eine formschlüssige Verbindung der nach außen schwenkbaren Seitenwand von der zugehörigen Stirnwand löst, um die Seitenwand zum Öffnen der aufgebauten Transportbox nach außen verschwenken zu können.

Die Seitenwände der erfindungsgemäßen faltbaren Transportbox sind mit abgebogenen Randbereichen versehen, die im aufgebauten Zustand der Transportbox zu den Stirnwänden hin orientiert sind. Dies erleichtert nicht nur eine mit einem Schnappelement gesicherte Verbindung zwischen den Seitenwänden und den Stirnwänden, sondern ermöglicht darüber hinaus, dass die Stirnwände im gefalteten Zustand der Transportbox zwischen den Boden und die Seitenwände gelegt werden können, da die Seitenwände durch die abgebogenen Randbereiche einen entsprechenden Raum zwischen sich und dem Boden umschließen.

Zur Optimierung der Kompaktheit des gefalteten Zustands der erfindungsgemäßen Transportbox weisen die Seitenwände unterschiedliche Abmessungen auf, so dass im aufgebauten Zustand der Transportbox die Randbereiche einer der beiden Seitenwände an den Innenseiten der Stirnwände anliegen, während die Randbereiche der anderen der beiden Seitenwände an den Außenseiten der Stirnwände anliegen. Im gefalteten Zustand wird dann zweckmäßigerweise diejenige Seitenwand zuletzt auf den Boden der Transportbox aufgelegt, die die größeren Abmessungen aufweist, so dass die Stirnwände im Raum zwischen dem Boden und der kleineren Seitenwand aufgenommen werden, während die größere Seitenwand so auf die kleinere Seitenwand aufgelegt wird, dass diese mitsamt den darin enthaltenen Stirnwänden innerhalb der größeren Seitenwand aufgenommen werden. Die größere Seitenwand mit ihren Randbereichen bildet zusammen mit dem Boden dann eine Art Koffer.

Wenn dann noch einrastende Verbindungselemente an der Oberseite der größeren Seitenwand angeordnet sind, und diese am Boden eingerastet werden können, ergibt sich ein kompakter und sicher gefalteter Zustand der erfindungsgemäßen Transportbox. Gleichwohl ist sie leicht aufzubauen und im aufgebauten Zustand leicht zu sichern, ohne im aufgebauten Zustand wegen der unterschiedlichen Abmessungen der beiden Seitenwände asymmetrisch zu wirken. Dies wird durch den Kontakt der Randbereiche der beiden Seitenwände mit den jeweiligen Stirnwänden gewährleistet.

Neben einer weiteren optischen Verbesserung kann die Stabilität der Transportbox in ihrem aufgebauten Zustand dadurch optimiert werden, dass die Stirnwände vorzugsweise mit Stabilisierungselementen zum Einschieben der abgebogenen Randbereiche der Seitenwände versehen sind.

Besonders bevorzugt wirken diese Stabilisierungselemente mit Vor- und/oder Rücksprüngen in den abgebogenen Randbereichen der Seitenwände zusammen, um zwischen dem Boden und der Oberseite der Transportbox wirkende Kräfte aufzunehmen, beispielsweise indem entsprechende Vorsprünge unter die Stabilisierungselemente greifen oder umgekehrt. Hierdurch wird dann zumindest ein Teil der Kräfte, die zwischen der Oberseite der Transportbox und dem Boden wirken, wenn die Transportbox getragen wird, von den Seitenwänden in die Stirnwände eingeleitet. Die Gewichtskraft der aufgebauten Transportbox, besonders, wenn ein Tier darin transportiert wird, kann dann also gleichmäßig von den Stirnwänden und den Seitenwänden aufgenommen werden, auch wenn beispielsweise ein Tagegriff nur an der Oberseite der Seitenwände angebracht ist.

Eine weitere bevorzugte Ausgestaltung der vorliegenden Erfindung besteht darin, dass die Stirnwände mit einem Rastmechanismus versehen sind, der so ausgebildet ist, dass die Stirnwände im nach oben orientierten, aufgerichteten Zustand einrasten. Dies erleichtert den Aufbau der faltbaren Transportbox.

Der Boden der erfindungsgemäßen faltbaren Transportbox ist bevorzugt unterseitig mit Rollen versehen, so dass die Transportbox im aufgebauten Zustand nicht unbedingt getragen werden muss, sondern auch auf dem Boden rollend geschoben oder gezogen werden kann. Hierbei ist es zweckmäßig, wenn der Boden, eine Stirnwand und/oder eine Seitenwand mit einer angeformten Öse zum Befestigen eines Gurtes oder Leine oder dergleichen versehen ist. Dann kann die erfindungsgemäße Transportbox ganz einfach auf Rollen gezogen werden, wobei beispielsweise eine Hundeleine verwendet werden kann, die ohnehin mitgeführt wird.

Zweckmäßigerweise ist eine der beiden Seitenwände an der Oberseite der Transportbox mit einem Tragegriff versehen. So kann die Transportbox sowohl in ihrem aufgebauten Zustand als auch in ihrem gefalteten Zustand leicht getragen werden, was naturgemäß insbesondere dann sinnvoll ist, wenn die Transportbox nicht allzu groß und das darin transportierte Tier nicht allzu schwer sind.

Im Rahmen der vorliegenden Erfindung ist es bevorzugt, wenn die faltbare Transportbox im Wesentlichen aus Kunststoff besteht, indem die Stirnwände, die Seitenwände und der Boden aus spritzgegossenem Kunststoff hergestellt sind. Gerade bei der Verwendung der Transportbox zum Transport von Kleintieren bietet Kunststoff als Material besondere Vorteile, da er robust und leicht zu reinigen ist, während die Transportbox bei großer Stabilität nur ein geringes Gewicht aufweist.

Schließlich ist es im Rahmen der vorliegenden Erfindung bevorzugt, wenn der Boden der Transportbox einen umlaufenden, nach oben abgebogenen Rand aufweist, an dem Scharniere zur Verbindung mit den Stirnwänden und den Seitenwänden angeordnet sind. Es bildet sich so eine Art Wanne, in die beispielsweise eine weiche Unterlage für ein Kleintier eingelegt werden kann. Des Weiteren verhindert ein nach oben abgebogener Rand des Bodens, dass ein Kleintier, das beim Transport steht, mit seinen Pfoten in die Scharnierbereiche der Stirnwände und Seitenwände gelangt und sich möglicherweise dort verletzen könnte.

Der abgebogene Rand ermöglicht, einen im Wesentlichen schalenförmigen Behälter für Wasser, Futter und dergleichen vorzusehen, der in die Transportbox integriert oder separat in diese einzusetzen ist und dessen Höhe an die Höhe des umlaufenden Randes des Bodens angepasst ist. Durch letztere Eigenschaft ist es möglich, die Transportbox in ihren gefalteten Zustand zu bringen, ohne den schalenförmigen Behälter, oder gegebenenfalls mehrere schalenförmige Behälter, aus der Transportbox entnehmen zu müssen.

Ein Ausführungsbeispiel für eine erfindungsgemäß ausgestaltete faltbare Transportbox wird im Folgenden anhand der beigefügten Zeichnungen näher beschrieben und erläutert. Es zeigen:
- Figur 1: eine isometrische Ansicht einer erfindungsgemäß ausgestalteten faltbaren Transportbox, im aufgebauten Zustand;
- Figur 2: ein Detail aus Figur 1;
- Figur 3: die faltbare Transportbox aus Figur 1 im aufgebauten und geöffneten Zustand;
- Figur 4: die faltbare Transportbox aus Figur 1 im aufgebauten und geöffneten Zustand, in einer anderen Ansicht;
- Figur 5: ein Detail aus Figur 3;
- Figur 6: die Transportbox aus Figur 1 in einer ersten Phase beim Falten;
- Figur 7: die Transportbox aus Figur 1 in einer zweiten Phase beim Falten;
- Figur 8: die Transportbox aus Figur 1 in einer dritten Phase beim Falten;
- Figur 9: die Transportbox aus Figur 1 im gefalteten Zustand;
- Figur 10: die Transportbox im gefalteten Zustand, in einer Ansicht von schräg unten;
- Figur 11: ein Detail aus Figur 9;
- Figur 12: die Transportbox aus Figur 1 in einer Ansicht von schräg unten;
- Figur 13: ein Detail aus Figur 1;
- Figur 14: ein Detail aus Figur 1, mit einer Variante des dargestellten Ausführungsbeispiels;
- Figur 15: ein Detail der geöffneten Transportbox in der Variante gemäß Figur 14.

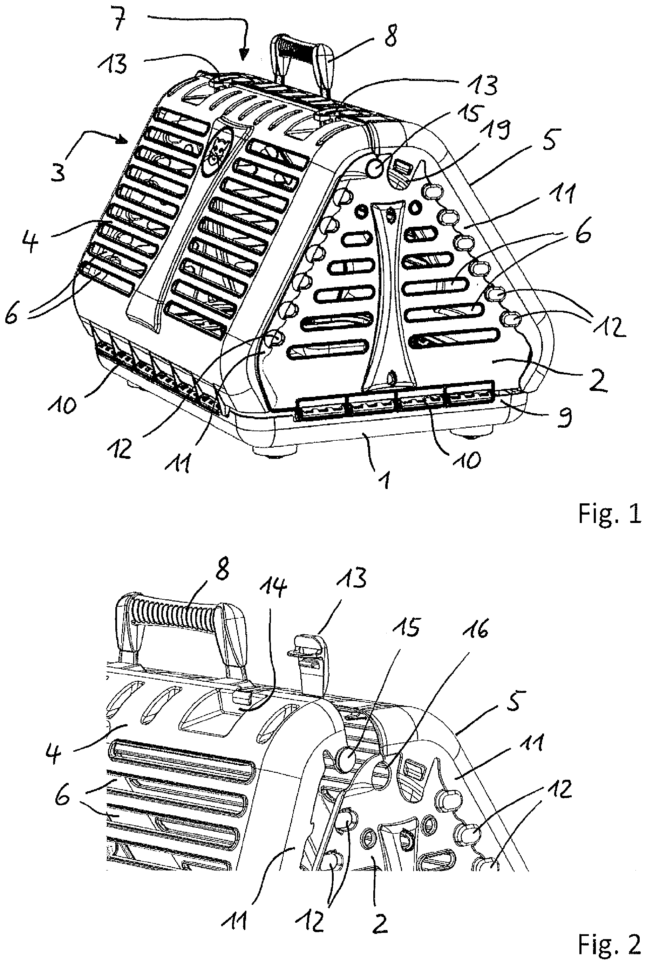

Die in Figur 1 in ihrem aufgebauten Zustand dargestellte faltbare Transportbox ist aus einem Boden 1, einer ersten Stirnwand 2, einer zweiten Stirnwand 3, einer ersten Seitenwand 4 und einer zweiten Seitenwand 5 zusammengesetzt. Sowohl die Stirnwände 2, 3 als auch die Seitenwände 4, 5 sind mit Luftschlitzen 6 versehen, um die Transportbox zum Transport von Kleintieren, hier insbesondere Katzen verwendbar zu machen. An einer Oberseite 7, an der die beiden Seitenwände 4, 5 aneinanderstoßen, ist ein Tragegriff 8 angebracht. Der Boden 1 weist einen umlaufenden, nach oben abgebogenen Rand 9 auf, an dem Scharniere 10 für die Stirnwände 2, 3 und die Seitenwände 4, 5 angebracht sind. Mittels dieser Scharniere 10 sind sowohl die Stirnwände 2, 3 als auch die Seitenwände 4, 5 schwenkbar am Boden 1 befestigt.

Die Seitenwände 4, 5 sind mit Randbereichen 11 versehen, die zu den Stirnwänden 2, 3 hin abgebogen sind. Die Seitenwände 4, 5 weisen unterschiedliche Abmessungen auf, so dass die Randbereiche 11 der ersten Seitenwand 4 von innen an den Stirnwänden 2, 3 anliegen, während die Randbereiche 11 der zweiten Seitenwand 5 von außen an den Stirnwänden 2, 3 anliegen. Hierbei sind an den Stirnwänden 2, 3 jeweils zwei Reihen von Stabilisierungselementen 12 vorgesehen, die zwischen sich und der eigentlichen Stirnwand 2, 3 eine Lücke bilden, in die die Randbereiche 11 der Seitenwände 4, 5 eingeschoben werden können.

An der Oberseite 7 der Transportbox sind die beiden Seitenwände 4, 5 lösbar miteinander verbunden, und zwar mittels zweier schwenkbarer Rastelemente 13, die an der zweiten Seitenwand 5 schwenkbar befestigt sind und an jeweils einer Haltefläche 14 an der zweiten Seitenwand 5 (Figur 2) einrastend festgelegt werden können.

Erfindungsgemäß ist die in den Zeichnungen dargestellte Transportbox durch Aufschwenken der zweiten Seitenwand 5 im aufgebauten Zustand zu öffnen, um beispielsweise eine Katze in die Transportbox hineinzusetzen oder aus dieser herauszulassen. Figur 2 zeigt in einer Detailansicht, welche Bedienungselemente hierfür vorgesehen sind. Zunächst werden die beiden Rastelemente 13 an der Oberseite 7 aus ihrem Eingriff genommen, indem sie nach oben weggeschwenkt werden, so dass sie die Halteflächen 14 an der ersten Seitenwand 4 freigeben. Aus Stabilitätsgründen ist die erste Seitenwand 4 jedoch nicht nur mittels der Rastelemente 13 an der zweiten Seitenwand 5 festgelegt, sondern auch über ein Schnappelement 15 an der ersten Stirnwand 2 gesichert. Hierzu ist das Schnappelement 15 elastisch verformbar an die erste Seitenwand 4 angeformt, und es greift von Innen in eine entsprechende Öffnung 16 in der ersten Stirnwand ein (Figur 1), so dass es durch einen Fingerdruck von außen aus dem Eingriff gedrückt werden kann, was zur in Figur 2 dargestellten Situation führt. Daraufhin kann die erste Seitenwand 4 nach außen weggeschwenkt werden.

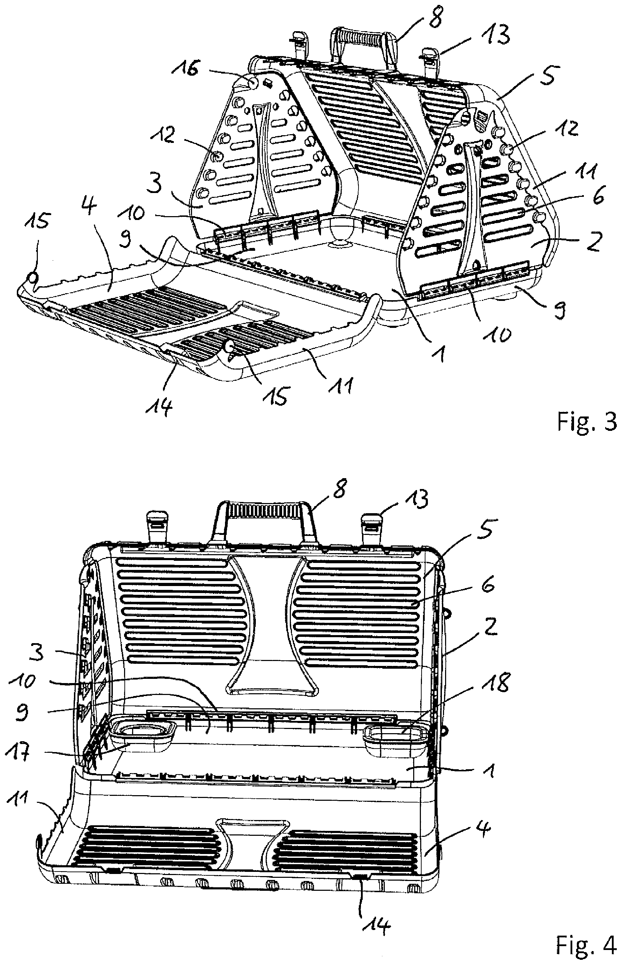

Dies ist in Figur 3 dargestellt: Hier ist die in Figur 1 gezeigte Transportbox zum Einsetzen oder Herausnehmen beispielsweise einer Katze geöffnet, indem die erste Seitenwand 4 vollständig nach außen weggeschwenkt wurde. Wie anhand Figur 3 ersichtlich ist, ergibt sich durch das erfindungsgemäße Wegschwenken der ersten Seitenwand 4 eine besonders große Öffnung, um beispielsweise eine Katze, die sich nur widerwillig in die Transportbox bringen lässt, bequem und sicher hineinsetzen zu können. Durch Hochschwenken der ersten Seitenwand 4 kann die Transportbox dann rasch geschlossen werden, wobei die beiden Schnappelemente 15, die an die erste Seitenwand 4 angeformt sind, in die Öffnungen 16 in die erste und zweite Stirnwand 2, 3 einrasten. Durch Verriegeln der beiden Rastelemente 13 wird die Transportbox dann in ihrem aufgebauten Zustand für den Transport gesichert.

Sämtliche Einzelteile des dargestellten Ausführungsbeispiels einer faltbaren Transportbox bestehen aus spritzgegossenem Kunststoff, der leicht, stabil und unkompliziert zu reinigen ist. Für den Einsatz als Transportbox für Kleintiere kann auf den Boden 1 eine Matte, ein Teppich oder dergleichen aufgelegt werden. Der umlaufende Rand 9 des Bodens 1 verhindert, dass eine solche eingelegte Matte oder im ungünstigsten Fall sogar die Pfoten eines hineingesetzten Tiers in den Bereich der Scharniere 10 gelangen.

Figur 4 zeigt die Transportbox aus Figur 3 in einer um die Hochachse gedrehten Ansicht, wobei auf den Boden 1 ein erster schalenförmiger Behälter 17 für Wasser und ein zweiter schalenförmiger Behälter 18 für Futter aufgesetzt sind. Diese beiden Behälter 17, 18 sind in ihrer Höhe an die Höhe des umlaufenden Randes 9 des Bodens 1 angepasst, so dass sie in der Transportbox verbleiben können, wenn diese gefaltet wird.

Im geöffneten, aufgebauten Zustand, wie er in den Figuren 3 und 4 dargestellt ist, ist die Transportbox nach dem vorliegenden Ausführungsbeispiel gleichwohl sehr formstabil, da aufgrund der abgebogenen Randbereiche 11 und der Stabilisierungselemente 12 der zweiten Seitenwand 5 bzw. der Stirnwände 2, 3 ein formschlüssiger Verbund der Stirnwände 2, 3 und der zweiten Seitenwand 5 bestehen bleibt, wobei die über Scharniere 10 bestehende Verbindung zum Boden 1 zusätzlich stabilisierend wirkt.

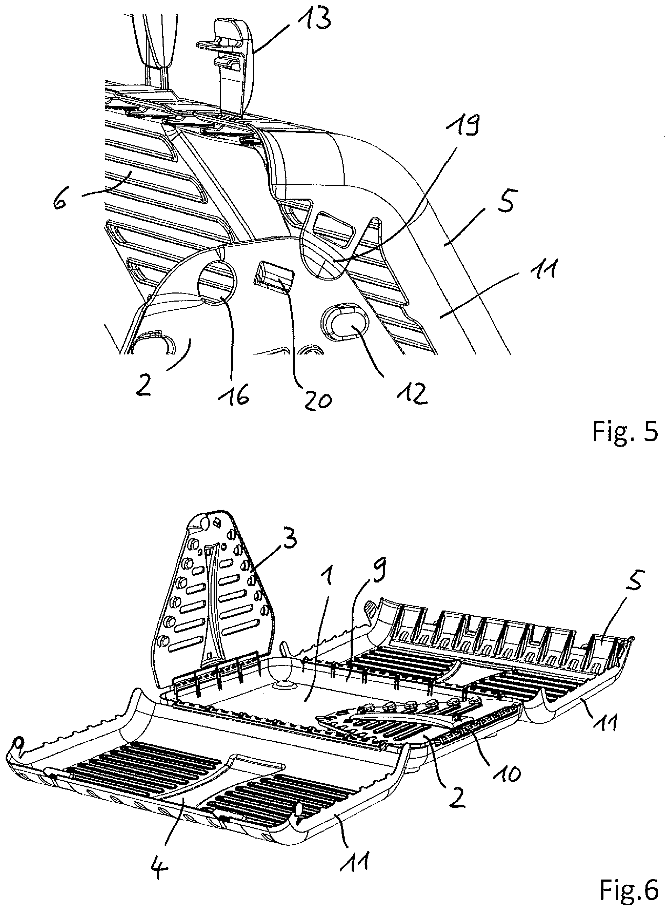

Um ein unbeabsichtigtes Wegschwenken der zweiten Seitenwand 5 zu verhindern, sind Rastlaschen 19 vorgesehen, die an die zweite Seitenwand 5 angeformt sind und in Rasthaken 20 eingreifen, die an den Stirnwänden 2, 3 angeordnet sind. Durch Anheben der Rastlaschen 19 löst sich diese Verbindung, so dass dann die zweite Seitenwand 5 ebenfalls nach außen weggeschwenkt werden kann, wie dies in Figur 5 dargestellt ist.

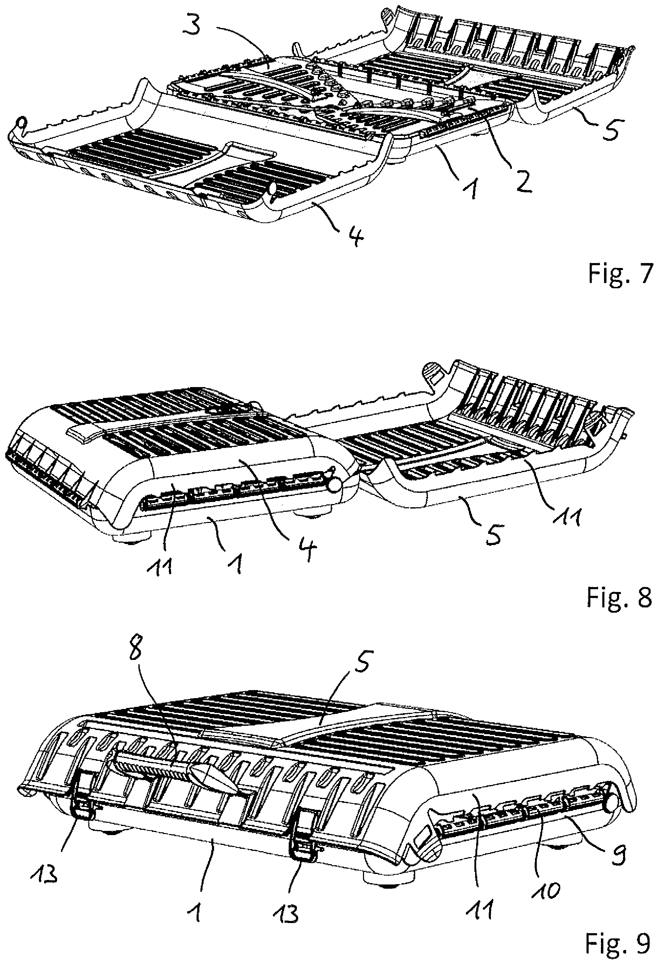

Um sodann die Transportbox zu falten, wird zunächst die erste Stirnwand 2, die nun von den Seitenwänden 4, 5 völlig freigegeben ist, nach innen auf den Boden 1 geschwenkt, wie dies Figur 6 zeigt. Wie in Figur 7 zu sehen, wird danach die zweite Stirnwand 3 ebenfalls nach innen geschwenkt und auf den Boden 1 aufgelegt. Danach wird, wie Figur 8 zeigt, die erste Seitenwand 4 nach innen verschwenkt, so dass sie sich auf den Boden 1 auflegt. Aufgrund einer mittels der abgebogenen Randbereiche 11 gebildeten Schalenform werden die beiden Stirnwände 2, 3 zwischen der ersten Seitenwand 4 und dem Boden 1 aufgenommen, so dass die erste Seitenwand 4 nicht nur indirekt über die Stirnwände 2, 3 auf dem Boden 1 aufliegt - wie dies im Rahmen der Erfindung der Fall sein kann - sondern sich auch auf den Scharnieren 10 der Stirnwände 2,3 abstützt und somit direkteren Kontakt mit dem Boden 1 erhält.

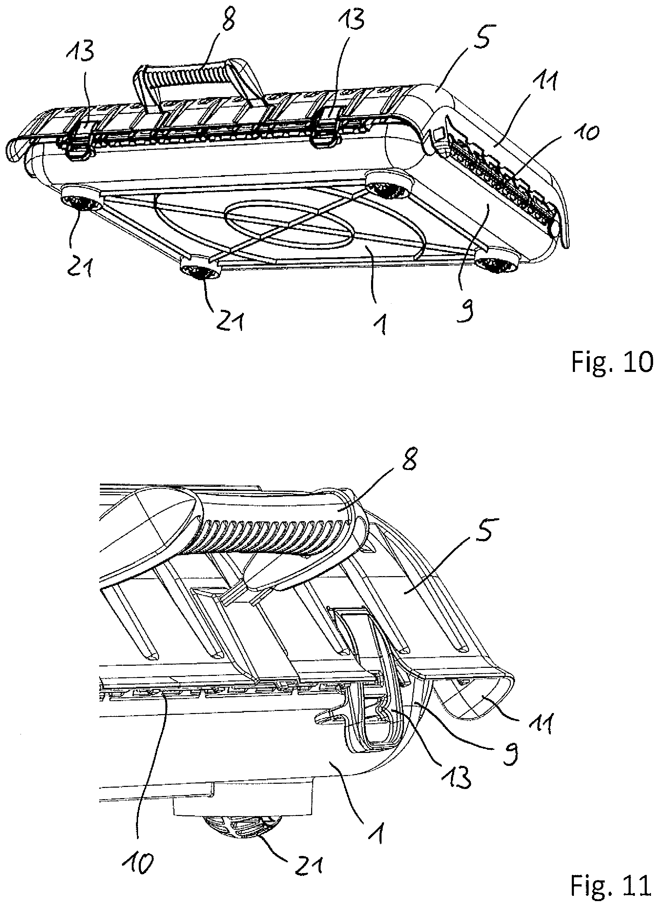

Als letzter Schritt, der in Figur 9 dargestellt ist, wird schließlich die zweite Seitenwand 5 nach innen verschwenkt und auf die erste Seitenwand 4 aufgelegt. Die zweite Seitenwand 5 ist in ihren Abmessungen größer als die erste Seitenwand 4, so dass letztere vollständig in erstere eingenestet werden kann. Die beiden Rastelemente 13, die an der Oberseite der zweiten Seitenwand 5 angeordnet sind, können schließlich heruntergeschwenkt und hinter eine vom Scharnier 10 der ersten Seitenwand 4 gebildeten Fläche eingerastet werden (Figur 11), so dass sich im Ergebnis der in Figur 9 dargestellte gefaltete Zustand der Transportbox ergibt. Dieser gefaltete Zustand ist aufgrund der Verriegelung über die Rastelemente 13 stabil, und aufgrund des umlaufenden Randes 9 des Bodens 1 und der abgebogenen Randbereiche 11 der zweiten Seitenwand 5 in etwa nach Art eines Aktenkoffers geformt. Die gefaltete Transportbox, wie sie auch in Figur 10 dargestellt ist, kann auch mit Hilfe des Tragegriffs 8, der zweckmäßigerweise an der größeren, zweiten Seitenwand 5 angebracht ist, wie ein Aktenkoffer getragen sowie platzsparend verstaut werden.

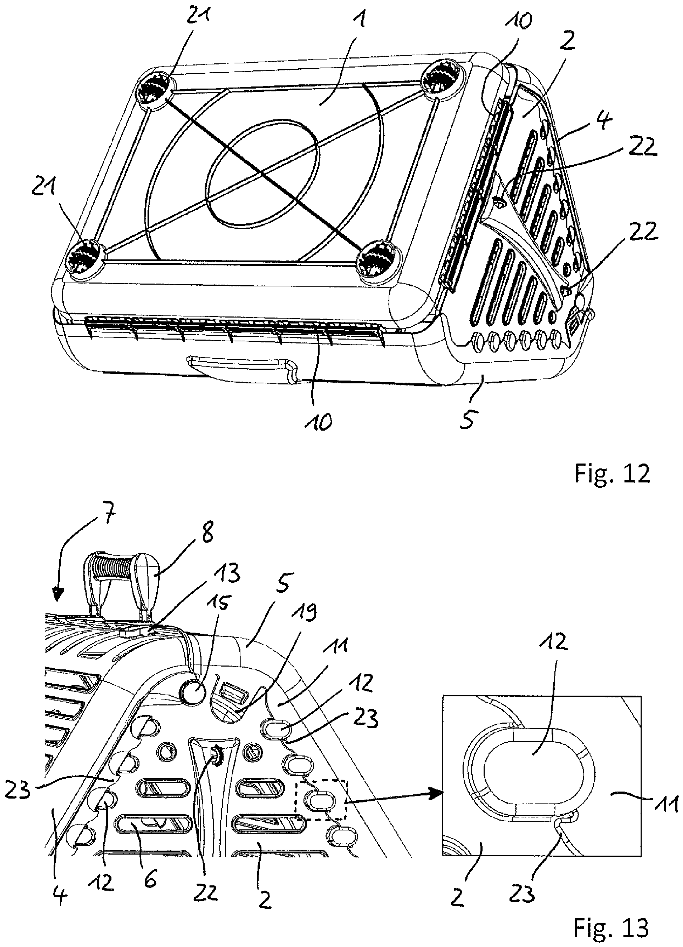

In der in Figur 10 dargestellten Ansicht von schräg unten ist, wie auch in Figur 12, der Boden 1 von unten zu sehen. Hierdurch wird ersichtlich, dass der Boden 1 unterseitig mit vier Rollen 21 ausgestattet ist. Die Transportbox kann daher wie ein Koffer mit Rollen auf dem Boden gerollt werden. Hierfür sind außerdem an der ersten Stirnwand 2 zwei Ösen 22 angebracht, um beispielsweise eine Leine anbringen zu können, an der die Transportbox, auf ihren Rollen 21 rollend, gezogen werden kann.

Um die Transportbox aus dem gefalteten Zustand, wie er in den Figuren 9 und 10 dargestellt ist, in den aufgebauten Zustand zu überführen, wie ihn Figur 1 zeigt, sind die in den Figuren 3, 6, 7 und 8 dargestellten Phasen in umgekehrter Reihenfolge zu durchlaufen.

Hierbei erleichtert die Tatsache, dass die Stirnwände 2, 3 beim Aufrichten aufgrund eines entsprechend ausgebildeten Scharniers 10 im aufgerichteten Zustand einrasten, die Handhabung signifikant.

Die vorliegende Erfindung stellt also eine sehr leicht handzuhabende faltbare Transportbox zur Verfügung, die platzsparend und kompakt aufzubewahren ist und im aufgebauten Zustand stabil und anwenderfreundlich zu handhaben und zu transportieren ist.

In Figur 13 ist ein Detail aus Figur 1 dargestellt, wobei der obere Bereich der Stirnwand 2 sowie insbesondere die Stabilisierungselemente 12 und ihr Zusammenwirken mit dem Randbereich 11 der Seitenwand 5 genauer dargestellt sind. Hierdurch ist erkennbar, dass der Randbereich 11 der Seitenwand 5 mit einer Anzahl von Vorsprüngen 23 versehen ist, die die Stabilisierungselemente 12 untergreifen und einen Teil der Traglast, die im vorliegenden Ausführungsbeispiel vom Tragegriff 8 in die Seitenwand 5 eingeleitet wird, aufnehmen und über die Stirnwand 2 in den Boden 1 abtragen.

Entsprechende Vorsprünge 23 sind auch in der Seitenwand 4 zu erkennen, die mit den dortigen Stabilisierungselementen 12 der Stirnwand 2 zusammenwirken. Somit wird die Traglast gleichmäßig auf die Seitenwände 4, 5 und die Stirnwände 2, 3 verteilt, was die Stabilität der gesamten Transportbox vergrößert und die Rastelemente 13 entlastet.

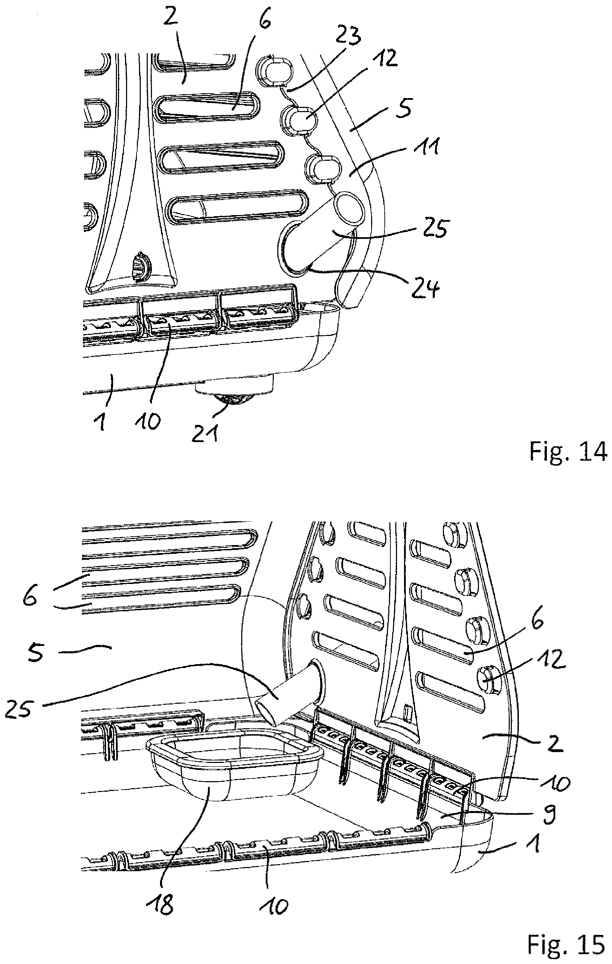

Figur 14 zeigt ein weiteres Detail aus Figur 1, jedoch handelt es sich hier um eine Variante des in Figur 1 dargestellten Ausführungsbeispiels. Diese Variante ist auch in Figur 15 abgebildet, wobei es sich hier um eine Seitenansicht der geöffneten Transportbox handelt.

Die in den Figuren 14 und 15 dargestellte Variante des vorliegenden Ausführungsbeispiels einer erfindungsgemäßen faltbaren Transportbox besitzt in der ersten Stirnwand 2 eine Öffnung 24, in die ein Einfüllrohr 25 eingesteckt ist. Dieses Einfüllrohr kann fest oder herausnehmbar sein, und es kann abweichend von der vorliegenden Darstellung auch mit einem Einfülltrichter versehen sein. Der Sinn und Zweck des Einfüllrohrs 25 erschließt sich bei Betrachtung der Figur 15, denn dort ist erkennbar, dass das Einfüllrohr 25 direkt über dem schalenförmigen Behälter 18 für Futter angeordnet ist. Dieser Behälter 18 kann somit von außen über das Einfüllrohr 25 nachgefüllt werden, ohne die Transportbox öffnen zu müssen. Über die Öffnung 24 kann ein in der Transportbox befindliches Tier wahlweise auch mit Trinkwasser versorgt werden, und zwar beispielsweise über das in den Figuren 14 und 15 dargestellte Einfüllrohr 25 oder über spezielle, an die Öffnung 24 anbringbare Trinkwasserspender.

## Patentansprüche

1. Faltbare Transportbox, insbesondere zum Transport von Kleintieren, mit einem Boden (1), an dem zwei Stirnwände (2, 3) und zwei Seitenwände (4, 5) schwenkbar befestigt sind, wobei die Stirnwände (2, 3) und die Seitenwände (4, 5) in einem gefalteten Zustand der Transportbox im Wesentlichen auf dem Boden (1) zusammengelegt sind, während sie in einem aufgebauten Zustand der Transportbox, vom Boden (1) ausgehend, im Wesentlichen nach oben orientiert aufgerichtet sind, wobei die Seitenwände (4, 5) im aufgebauten Zustand der Transportbox an deren Oberseite (7) lösbar miteinander verbunden sind, um die Transportbox oben zu schließen, und wobei mindestens eine Seitenwand (4) von den Stirnwänden (2, 3) lösbar und nach außen schwenkbar ist, um die Transportbox im aufgebauten Zustand zu öffnen,
**dadurch gekennzeichnet,**
**dass** die Seitenwände (4, 5) einteilig ausgebildet sind und mit, im aufgebauten Zustand der Transportbox, zu den Stirnwänden (2, 3) hin abgebogenen Randbereichen (11) versehen sind, wobei die Seitenwände (4, 5) unterschiedliche Abmessungen aufweisen, so dass im aufgebauten Zustand der Transportbox die Randbereiche (11) einer der beiden Seitenwände (4) an den Innenseiten der Stirnwände (2, 3) anliegen, während die Randbereiche (11) der anderen der beiden Seitenwände (5) an den Außenseiten der Stirnwände (2, 3) anliegen.

2. Faltbare Transportbox nach Anspruch 1,
**dadurch gekennzeichnet,**
**dass** die Seitenwände (4, 5) an der Oberseite (7) der Transportbox im aufgebauten Zustand mit lösbaren Verbindungselementen, insbesondere einrastenden Verbindungselementen, besonders bevorzugt mit schwenkbaren Rastelementen (13) miteinander verbunden sind.

3. Faltbare Transportbox nach Anspruch 2,
**dadurch gekennzeichnet,**
**dass** mindestens eine Seitenwand (5) im gefalteten Zustand der Transportbox mit den lösbaren Verbindungselementen (13) am Boden (1) befestigbar ist.

4. Faltbare Transportbox nach mindestens einem der Ansprüche 1 bis 3,
**dadurch gekennzeichnet,**
**dass** zumindest die nach außen schwenkbare Seitenwand (4) im aufgebauten Zustand der Transportbox mittels Halteelementen (15) lösbar an mindestens einer Stirnwand (2, 3) gesichert ist, wobei die Halteelemente ein an der Seitenwand (4) oder der Stirnwand (2, 3) angebrachtes, elastisch verformbares Schnappelement (15) umfassen, das von innen in eine Öffnung (16) der Stirnwand (2, 3) oder der Seitenwand (4) eingreift und durch Druck von außen aus dem Eingriff lösbar ist.

5. Faltbare Transportbox nach mindestens einem der Ansprüche 1 bis 4,
**dadurch gekennzeichnet,**
**dass** die Stirnwände (2, 3) mit Stabilisierungselementen (12) zum Einschieben der abgebogenen Randbereiche (11) der Seitenwände (4, 5) versehen sind.

6. Faltbare Transportbox nach Anspruch 5,
**dadurch gekennzeichnet,**
**dass** die Stabilisierungselemente (12) mit Vor- und/oder Rücksprüngen (23) in den abgebogenen Randbereichen (11) zusammenwirken, um zwischen dem Boden (1) und der Oberseite (7) der Transportbox wirkenden Kräfte aufzunehmen und zumindest zum Teil von den Seitenwänden (4, 5) in die Stirnwände (2, 3) einzuleiten.

7. Faltbare Transportbox nach mindestens einem der Ansprüche 1 bis 6,
**dadurch gekennzeichnet,**
**dass** die Stirnwände (2, 3) mit einem Rastmechanismus (24) versehen sind, der so ausgebildet ist, dass sie im nach oben orientierten, aufgerichteten Zustand einrasten.

8. Faltbare Transportbox nach mindestens einem der Ansprüche 1 bis 7,
**dadurch gekennzeichnet,**
**dass** der Boden (1) unterseitig mit Rollen (21) versehen ist.

9. Faltbare Transportbox nach Anspruch 8,
**dadurch gekennzeichnet,**
**dass** der Boden (1), eine Stirnwand (2, 3) und/oder eine Seitenwand (4, 5) mit einer angeformten Öse (22) zum Befestigen eines Gurtes oder einer Leine oder dergleichen versehen ist.

10. Faltbare Transportbox nach mindestens einem der Ansprüche 1 bis 9,
**dadurch gekennzeichnet,**
**dass** eine der beiden Seitenwände (5) an der Oberseite (7) der Transportbox mit einem Tragegriff (8) versehen ist.

11. Faltbare Transportbox nach mindestens einem der Ansprüche 1 bis 10,
**dadurch gekennzeichnet,**
**dass** die Stirnwände (2, 3), die Seitenwände (4, 5) und der Boden (1) aus spritzgegossenem Kunststoff bestehen.

12. Faltbare Transportbox nach mindestens einem der Ansprüche 1 bis 11,
**dadurch gekennzeichnet,**
**dass** der Boden (1) einen umlaufenden, nach oben abgebogenen Rand (9) aufweist, an dem Scharniere (10) zur Verbindung mit den Stirnwänden (2, 3) und den Seitenwänden (4, 5) angeordnet sind.

13. Faltbare Transportbox nach Anspruch 12,
**dadurch gekennzeichnet,**
**dass** mindestens ein integrierter oder separat in die Transportbox einzusetzender, im wesentlichen schalenförmiger Behälter (17, 18) für Wasser, Futter und dergleichen vorgesehen ist, dessen Höhe an die Höhe des umlaufenden Randes (9) des Bodens (1) angepasst ist.

## Claims

1. A collapsible transport box, particularly for transporting small animals, with a base (1) to which two end walls (2, 3) and two side walls (4, 5) are pivotably fastened, wherein the end walls (2, 3) and the side walls (4, 5) in a collapsed condition of the transport box, are folded substantially into the base (1) whilst, in an erected condition of the transport box, they are aligned, starting from the base (1), substantially upwardly, wherein the side walls (4, 5) are releasably connected together, in the erected condition of the transport box at their upper side (7) in order to close the transport box at the top and wherein at least one side wall (4) is releasable from the end walls (2, 3) and is pivotable outwardly in order to open the transport box in the erected condition, **characterised in that** the side walls (4, 5) are of one-piece construction and are provided with edge regions (11) which are bent, in the erected condition of the transport box, towards the end walls (2, 3) wherein the side walls (4, 5) have different dimensions so that, in the erected condition of the transport box, the edge regions (11) of one of the two side walls (4) engage the inner sides of the end walls (2, 3) whilst the edge regions (11) of the other of the two side walls (5) engage the outer sides of the end walls (2, 3).

2. A collapsible transport box as claimed in Claim 1, **characterised in that** the side walls (4, 5) are connected together at the upper side (7) of the transport box, in the erected condition, with releasable connecting elements, particularly latching connecting elements, particularly preferably with pivotable latching elements (13).

3. A collapsible transport box as claimed in Claim 2, **characterised in that** at least one side wall (5) is fastenable, in the collapsed condition of the transport box, to the base (1) with the releasable connecting elements (13).

4. A collapsible transport box as claimed in at least one of Claims 1 to 3, **characterised in that** at least the outwardly pivotable side wall (4) is releasably secured to at least one side wall (2, 3), in the erected condition of the transport box, by means of retaining elements (15), wherein the retaining elements include an elastically deformable snap element (15), which is attached to the side wall (4) or the end wall (2, 3) and engages from the interior into an opening (16) in the side wall (2, 3) or the side wall (4) and is releasable from the engagement by pressure from the exterior.

5. A collapsible transport box as claimed in at least one of Claims 1 to 4, **characterised in that** the end walls (2, 3) are provided with stabilisation elements (12) for the insertion of the bent edge regions (11) of the side walls (4, 5).

6. A collapsible transport box as claimed in Claim 5, **characterised in that** the stabilisation elements (12) cooperate with projections and/or recesses (23) in the bent edge regions (11) in order to absorb forces acting between the base (1), the upper side (7) of the transport box and to introduce them, at least partially, from the side walls (4, 5) into the end walls (2, 3).

7. A collapsible transport box as claimed in at least one of Claims 1 to 6, **characterised in that** the end walls (2, 3) are provided with a locking mechanism (24), which is so constructed that they lock when in the upwardly orientated, erected condition.

8. A collapsible transport box as claimed in at least one of Claims 1 to 7, **characterised in that** the base (1) is provided on its underside with rollers (21).

9. A collapsible transport box as claimed in Claim 8, **characterised in that** the base (1), one end wall (2, 3) and/or one side wall (4, 5) is provided with an integrally formed eye (22) for fastening a strap or a leash or the like.

10. A collapsible transport box as claimed in at least one of Claims 1 to 9, **characterised in that** one of the two side walls (5) is provided on the upper side (7) of the transport box with a carrying handle (8).

11. A collapsible transport box as claimed in at least one of Claims 1 to 10, **characterised in that** the end walls (2, 3), the side walls (4, 5) and the base (1) consist of injection moulded plastic material.

12. A collapsible transport box as claimed in at least one of Claims 1 to 11, **characterised in that** the base (1) includes a peripheral, upwardly bent edge (9), on which hinges (10) are arranged for connection with the end walls (2, 3) and the side walls (4, 5).

13. A collapsible transport box as claimed in Claim 12, **characterised in that** at least one substantially bowl-shaped container (17, 18) for water, food and the like, which is integrated or is to be inserted separately into the transport box, is provided, the height of which is matched to the height of the peripheral edge (9) of the base (1).

## Revendications

1. Cage de transport pliable, en particulier pour le transport de petits animaux, avec un fond (1) sur lequel sont fixées à pivotement deux parois frontales (2, 3) et deux parois latérales (4, 5), sachant que les parois frontales (2, 3) et les parois latérales (4, 5) sont pour l'essentiel repliées sur le fond (1) dans un état plié de la cage de transport, tandis que, dans un état monté de la cage de transport, elles sont dressées à partir du fond (1) en étant orientées pour l'essentiel vers le haut, sachant que les parois latérales (4, 5) sont, dans l'état monté de la cage de transport, reliées entre elles de manière détachable sur le côté supérieur (7) de la cage de transport, afin de fermer la cage de transport vers le haut, et sachant qu'au moins une paroi latérale (4) peut être détachée des parois frontales (2, 3) et pivotée vers l'extérieur, afin d'ouvrir la cage de transport dans l'état monté,
**caractérisée en ce que** les parois latérales (4, 5) sont réalisées d'une seule pièce et sont pourvues, dans l'état monté de la cage de transport, de régions de bords (11) recourbées en direction des parois frontales (2, 3), sachant que les parois latérales (4, 5) présentent des dimensions différentes, de sorte que, dans l'état monté de la cage de transport, les régions de bords (11) d'une (4) des deux parois latérales s'appliquent contre les côtés intérieurs des parois frontales (2, 3), tandis que les régions de bords (11) de l'autre (5) des deux parois latérales s'appliquent contre les côtés extérieurs des parois frontales (2, 3).

2. Cage de transport pliable selon la revendication 1, **caractérisée en ce que** les parois latérales (4, 5) sont reliées entre elles sur le côté supérieur (7) de la cage de transport dans l'état monté par des éléments de liaison détachables, en particulier des éléments de liaison à enclenchement, d'une manière particulièrement préférée par des éléments d'enclenchement pivotants (13).

3. Cage de transport pliable selon ia revendication 2, **caractérisée en ce qu'**au moins une paroi latérale (5) peut, dans l'état plié de la cage de transport, être fixée sur le fond (1) par les éléments de liaison détachables (13).

4. Cage de transport pliable selon au moins une des revendications 1 à 3, **caractérisée en ce qu'**au moins la paroi latérale (4) pouvant pivoter vers l'extérieur est, dans l'état monté de la cage de transport, assujettie de manière détachable sur au moins une paroi frontale (2, 3) au moyen d'éléments de retenue (15), sachant que les éléments de retenue comprennent un élément à déclic (15) élastiquement déformable, installé sur la paroi latérale (4) ou la paroi frontale (2, 3), qui s'engage de l'intérieur dans une ouverture (16) de la paroi frontale (2, 3) ou de la paroi latérale (4) et qui peut être désengagé en le pressant de l'extérieur.

5. Cage de transport pliable selon au moins une des revendications 1 à 4, **caractérisée en ce que** les parois frontales (2, 3) sont pourvues d'éléments de stabilisation (12) pour l'insertion des régions de bords recourbées (11) des parois latérales (4, 5).

6. Cage de transport pliable selon la revendication 5, **caractérisée en ce que** les éléments de stabilisation (12) coopèrent avec des saillies et/ou des renfoncements (23) dans les régions de bords recourbées (11), afin de recevoir les forces agissant entre le fond (1) et le côté supérieur (7) de la cage de transport et de les faire passer au moins pour partie des parois latérales (4, 5) dans les parois frontales (2, 3).

7. Cage de transport pliable selon au moins une des revendications 1 à 6, **caractérisée en ce que** les parois frontales (2, 3) sont pourvues d'un mécanisme d'enclenchement (24) qui est conçu de telle sorte qu'elles s'enclenchent dans l'état dressé, orienté vers le haut.

8. Cage de transport pliable selon au moins une des revendications 1 à 7, **caractérisée en ce que** le fond (1) est pourvu sur le dessous de roulettes (21).

9. Cage de transport pliable selon la revendication 8, **caractérisée en ce que** le fond (1), une paroi frontale (2, 3) et/ou une paroi latérale (4, 5) est pourvu(e) d'un anneau formé (22) sur lui/elle pour la fixation d'une sangle ou d'une corde ou analogues.

10. Cage de transport pliable selon au moins une des revendications 1 à 9, **caractérisée en ce qu'**une (5) des deux parois latérales est pourvue d'une poignée de transport (8) sur le côté supérieur (7) de la cage de transport.

11. Cage de transport pliable selon au moins une des revendications 1 à 10, **caractérisée en ce que** les parois frontales (2, 3), les parois latérales (4, 5) et le fond (1) sont réalisés en matière plastique moulée par injection.

12. Cage de transport pliable selon au moins une des revendications 1 à 11, **caractérisée en ce que** le fond (1) présente un bord périphérique (9) recourbé vers le haut, sur lequel sont disposées des charnières (10) pour la liaison avec les parois frontales (2, 3) et les parois latérales (4, 5).

13. Cage de transport pliable selon la revendication 12, **caractérisée en ce qu'**il est prévu au moins un récipient (17, 18) essentiellement en forme d'écuelle, intégré ou à installer séparément dans la cage de transport et destiné à de l'eau, de la nourriture pour animaux et analogues, récipient dont la hauteur est adaptée à la hauteur du bord périphérique (9) du fond (1).
